# EUROPEAN PATENT APPLICATION

(11) **EP 4 513 639 A1**
(43) Date of publication of application: **26.02.2025**
(21) Application number: 24188560.7
(22) Date of filing: 15.07.2024
(51) Int. Cl.: H01M 50/124

(54) **POWER STORAGE CELL**

(30) Priority: 19.07.2023 JP 2023117271
(71) Applicant: TOYOTA JIDOSHA KABUSHIKI KAISHA, Aichi-ken, 471-8571 (JP)
(72) Inventor: SHIMURA, Yosuke, Toyota-shi, 471-8571 (JP); OBAYASHI, Yoshiro, Toyota-shi, 471-8571 (JP); YAMANAKA, Atsushi, Toyota-shi, 471-8571 (JP); CHIHARA, Masashi, Toyota-shi, 471-8571 (JP); SUGIE, Kazuki, Toyota-shi, 471-8571 (JP); YONEKAWA, Kosuke, Toyota-shi, 471-8571 (JP); HIRAO, Yasuhiro, Toyota-shi, 471-8571 (JP)
(74) Representative: D Young & Co LLP

(57) **Abstract**

In the cell case of the power storage cell according to the present disclosure, the cylindrical main body portion is formed by forming a film into a cylindrical shape, and the first opening portion and the second opening portion are formed at both ends thereof, respectively. The first sealing body closes the first opening portion. The second sealing body closes the second opening portion. The first sealing body includes an outer peripheral face that is in contact with an inner peripheral face of the cylindrical main body portion. The outer peripheral face includes a main body surface portion and a protruding portion. The main body surface portion extends in parallel to a first direction in which the first opening portion and the second opening portion are arrayed. The protruding portion protrudes from the main body surface portion toward the cylindrical main body portion.

## Description

### BACKGROUND OF THE INVENTION

### 1. Field of the Invention

The present disclosure relates to a power storage cell.

### 2. Description of Related Art

Japanese Unexamined Patent Application Publication No. 2019-106372 (JP 2019-106372 A) discloses a battery including a battery case and an electrode assembly. The battery case includes an accommodating portion for accommodating the electrode assembly, and a lid portion. The lid portion covers at least a part of an open face of the accommodating portion. After disposing the electrode assembly and injecting an electrolytic solution, the open face of the accommodating portion is closed or sealed by the lid portion.

### SUMMARY OF THE INVENTION

In a cell case for the battery such as disclosed in JP 2019-106372 A, suppressing deterioration in sealing property is important, in order to suppress variance in amount of water in the cell case. When the power storage cell is used in in-vehicle applications, for example, there is demand to reduce a height of the power storage cell, and also to further increase a dimension of the power storage cell in one of lateral directions in order to suppress decrease in energy density. However, in conventional power storage cells, it has been difficult to manufacture a cell case having an even longer dimension in the one direction. Accordingly, there has been limitation to the dimension in the one direction.

The present disclosure has been made in view of the above problem. An object of the present disclosure is to provide a power storage cell that is capable of increasing degree of dimensional freedom of the cell case in the one direction, and also of suppressing deterioration in the sealing property of the cell case.

A power storage cell according to the present disclosure includes an electrode body and a cell case. The cell case accommodates the electrode body. The cell case includes a cylindrical main body portion, a first sealing body, and a second sealing body. For the cylindrical main body portion, a film is fashioned into a cylindrical shape, with a first opening portion and a second opening portion provided at respective ends. The first sealing body closes the first opening portion. The second sealing body closes the second opening portion. The first sealing body includes an outer peripheral face that is in contact with an inner peripheral face of the cylindrical main body portion. The outer peripheral face includes a main body surface portion and a protruding portion. The main body surface portion extends in parallel to a first direction in which the first opening portion and the second opening portion are arrayed. The protruding portion protrudes from the main body surface portion toward the cylindrical main body portion.

According to the above configuration, the cylindrical main body portion of the cell case is formed from film. Accordingly, the degree of dimensional freedom of the cell case in the first direction can be increased. Further, even when the cylindrical main body portion is formed from film, space between the inner peripheral face of the cylindrical main body portion and the outer peripheral face of the first sealing body has a labyrinth structure, due to the main body surface portion and the protruding portion. Thus, even when the cylindrical main body portion of the cell case is formed from film, deterioration in the sealing property of the cell case can be suppressed.

According to the present disclosure, the degree of dimensional freedom of the cell case in the one direction can be increased, and also deterioration in the sealing property of the cell case can be suppressed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view illustrating a power storage cell according to an embodiment;
FIG. 2 is an exploded perspective view of a power storage cell according to an embodiment;
FIG. 3 is a cross-sectional view taken along III-III shown in FIG. 1;
FIG. 4 is a cross-sectional view taken along IV-IV shown in FIG. 1;
FIG. 5 is an enlarged partial cross-sectional view of area V of FIG. 3; and
FIG. 6 is a perspective view schematically showing a state in which the cell case is formed in the power storage cell according to the embodiment.

### DETAILED DESCRIPTION OF EMBODIMENTS

Embodiments of the present disclosure will be described with reference to the drawings. In the drawings referred to below, the same or corresponding members are denoted by the same reference numerals.

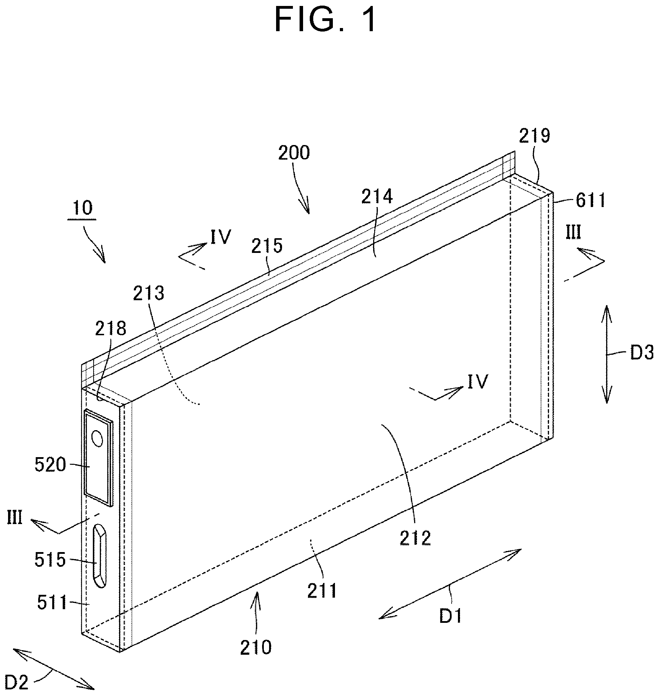

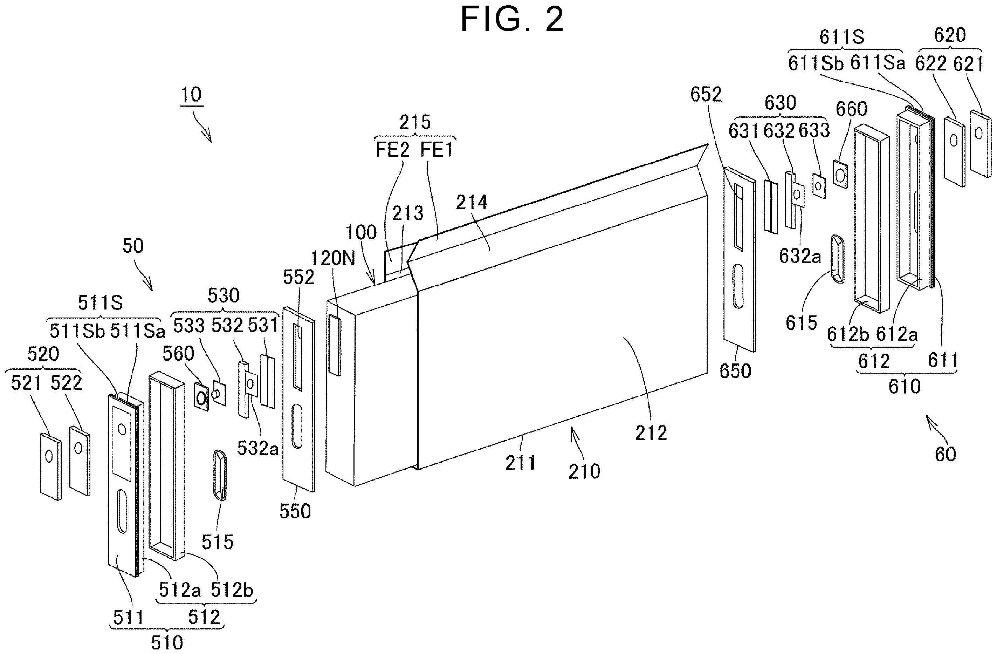

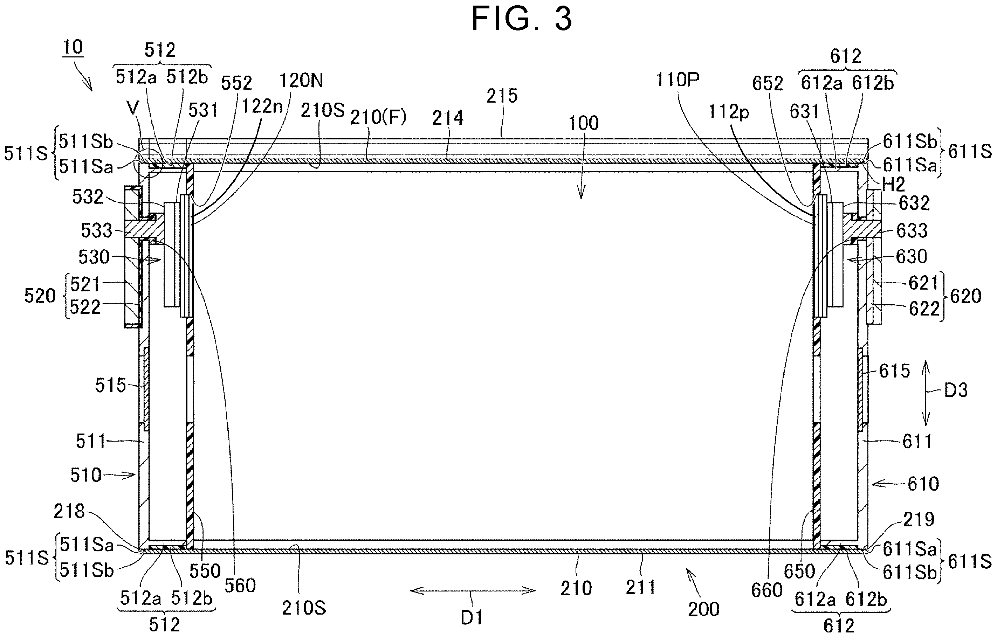

FIG. 1 is a perspective view illustrating a power storage cell according to an embodiment. FIG. 2 is an exploded perspective view of a power storage cell according to an embodiment. FIG. 3 is a cross-sectional view taken along III-III shown in FIG. 1. As illustrated in FIGS. 1 to 3, the power storage cell 10 according to an embodiment includes an electrode body 100, a cell case 200, a positive electrode member 620 as a positive electrode terminal, and a negative electrode member 520 as a negative electrode terminal.

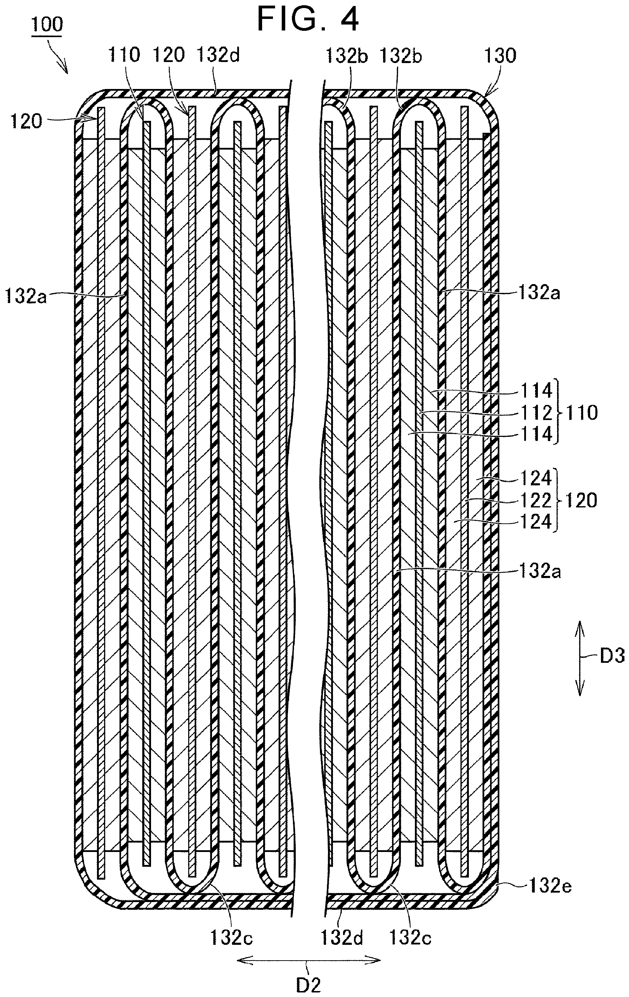

FIG. 4 is a cross-sectional view taken along IV-IV shown in FIG. 1. In FIG. 4, for convenience, the cell case 200 of the power storage cell 10 is omitted, and only the electrode body 100 is illustrated. With reference to FIG. 4, the details of the electrode body 100 will be described.

As illustrated in FIG. 4, the electrode body 100 includes a plurality of positive electrodes 110, a plurality of negative electrodes 120, and a separator 130. The plurality of positive electrodes 110 and the plurality of negative electrodes 120 are arranged alternately in the thickness direction (second direction D2) while being insulated by the separators 130.

The negative electrodes 120 are formed in a rectangular shape having a length in the widthwise direction (first direction D1) and a width in the height direction (third direction D3). The second direction D2 is a direction perpendicular to the first direction D1. The third direction D3 is a direction perpendicular to both the first direction D1 and the second direction D2. Each negative electrode 120 includes a negative electrode current collector foil 122 and a negative electrode active material layer 124 provided on both surfaces of the negative electrode current collector foil 122. The negative electrode current collector foil 122 has a negative electrode tab 122n (see FIG. 3) in which the negative electrode active material layers 124 are not provided. The negative electrode tab 122n protrudes toward one side in the first direction D1.

The positive electrodes 110 are formed in a rectangular shape having a length in the first direction D1 and a width in the third direction D3. The positive electrode 110 includes a positive electrode collector foil 112 and positive electrode active material layers 114 provided on both surfaces of the positive electrode collector foil 112 in the second direction D2. The positive electrode collector foil 112 has a positive electrode tab 112p (see FIG. 3) in which the positive electrode active material layers 114 are not provided. The positive electrode tab 112p protrudes toward the other side of the first direction D1.

The separator 130 insulates the positive electrode 110 from the negative electrode 120. The separator 130 is made of an insulating material and has minute voids that allow transmission of ions. The separator 130 is formed in a zigzag shape.

The separator 130 has a rectangular shape before being formed into a zigzag-fold shape. The separator 130 is disposed while being formed in a zigzag shape between the positive electrode 110 and the negative electrode 120. The separators 130 have a plurality of intervening portions 132a, a plurality of first folded portions 132b, a plurality of second folded portions 132c, and an outermost covering portion 132d.

The intervening portions 132a are interposed between the positive electrode 110 and the negative electrode 120 adjacent to each other in the second direction D2. That is, the intervening portions 132a have a function of insulating the positive electrode 110 and the negative electrode 120 from each other. The intervening portions 132a are formed of rectangular regions.

The first folded portions 132b connect one end portions of the intervening portions 132a adjacent to each other in the second direction D2 on the third direction D3 so that the positive electrode 110 is positioned therebetween. The first folded portion 132b is disposed on one side (upper side) of the third direction D3 of the positive electrode 110.

The second folded portions 132c connect the other end portions of the intervening portions 132a adjacent to each other in the second direction D2 in the third direction D3 so that the negative electrode 120 is positioned therebetween. The second folded-back portion 132c is disposed on the other side (lower side) of the third direction D3 of the negative electrode 120.

The outermost covering portion 132d collectively covers the first folded portion 132b and the second folded portion 132c. More specifically, the outermost covering portion 132d covers all of the positive electrodes 110, all of the negative electrodes 120, all of the intervening portions 132a, all of the first folded portions 132b, and all of the second folded portions 132c together while winding around a central axis parallel to the first direction D1. The terminal 132e of the outermost covering portion 132d is set so as not to overlap with the positive electrode active material layer 114 and the negative electrode active material layer 124 in the second direction D2. In the present embodiment, the terminal 132e of the outermost covering portion 132d is provided below the respective positive electrodes 110 and the respective negative electrodes 120. An insulating film (not shown) may be coated on a peripheral face and a bottom surface of the plurality of positive electrodes 110, the plurality of negative electrodes 120, and the separator 130.

The cell case 200 houses the electrode body 100. The cell case 200 has a substantially rectangular parallelepiped shape. The cell case 200 is configured such that a dimension in the first direction D1 is longer than a dimension in the third direction D3 and a dimension in the second direction D2. Further, the cell case 200 is configured such that a dimension in the third direction D3 is longer than a dimension in the second direction D2.

The cell case 200 contains an electrode body 100 and an electrolyte (not shown) therein. The cell case 200 includes a cylindrical main body portion 210, a first sealing body 510, and a second sealing body 610.

The cylindrical main body portion 210 is formed with a first opening portion 218 and a second opening portion 219 at both ends thereof in the first direction D1, respectively. The first opening portion 218 is provided on one side of the first direction D1. The second opening portion 219 is provided on the other side of the first direction D1. The cylindrical main body portion 210 is formed by forming the film F into a cylindrical shape. A specific method of forming the cylindrical main body portion 210 will be described later.

The cylindrical main body portion 210 includes a bottom surface portion 211, a first side surface portion 212, a second side surface portion 213, a top surface portion 214, and a belt-like portion 215.

The bottom surface portion 211 is located on one side of the third direction D3. The bottom surface portion 211 has a rectangular outer shape when viewed from the third direction D3.

The first side surface portion 212 stands up along the third direction D3 from one end of the bottom surface portion 211 in the second direction D2. The second side surface portion 213 stands up along the third direction D3 from the other end of the bottom surface portion 211 in the second direction D2. The first side surface portion 212 and the second side surface portion 213 have a rectangular outer shape when viewed from the second direction D2.

The top surface portion 214 is located on the other side of the third direction D3. The top surface portion 214 has a rectangular outer shape when viewed from the third direction D3. The top surface portion 214 connects the upper end portions of the first side surface portion 212 and the second side surface portion 213. In the present embodiment, the top surface portion 214 extends from the first side surface portion 212. The top surface portion 214 is connected to the second side surface portion 213 via the belt-like portion 215.

The belt-like portion 215 is formed by joining the first side end portion FE1 and the second side end portion FE2 located at both ends of the film F to each other.

The strip 215 extends along the first direction D1. The belt-like portion 215 extends to the outside of the cell case 200. As described above, in the present embodiment, the belt-like portion 215 connects the top surface portion 214 and the second side surface portion 213. However, the position of the belt-shaped portion 215 is not particularly limited. The belt-like portion 215 may connect the top surface portion 214 and the first side surface portion 212, may connect the bottom surface portion 211 and the first side surface portion 212, or may connect the bottom surface portion 211 and the second side surface portion 213.

The first opening portion 218 is formed by one end of the bottom surface portion 211, the first side surface portion 212, the second side surface portion 213, and the top surface portion 214. The second opening portion 219 is formed at the other end thereof.

The first sealing body 510 closes the first opening portion 218. The first sealing body 510 has a (first) outer peripheral face 511S in contact with the inner peripheral face 210S of the cylindrical main body portion 210. In the present embodiment, the entire first sealing body 510 is positioned on the inner peripheral face 210S of the cylindrical main body portion 210.

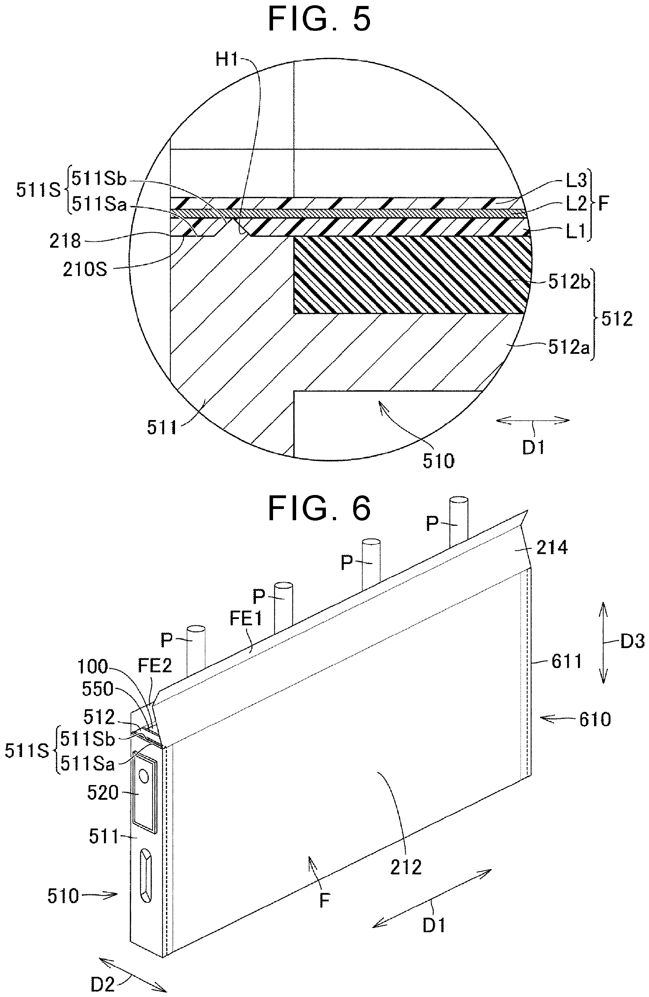

FIG. 5 is an enlarged partial cross-sectional view of the region V of FIG. 3. As shown in FIGS. 2, 3, and 5, the outer peripheral face 511S has a (first) main body surface portion 511Sa and a (first) protruding portion 511Sb.

The main body surface portion 511Sa extends parallel to the first direction D1 in which the first opening portion 218 and the second opening portion 219 are arranged (see FIG. 5). The protruding portion 511Sb protrudes from the main body surface portion 511Sa toward the cylindrical main body portion 210. The protruding portion 511Sb extends annularly along the circumference of the inner peripheral face 210S of the cylindrical main body portion 210 (see FIG. 2).

The first sealing body 510 includes a first plate-shaped portion 511 and a first extending portion 512. Specifically, the first plate-shaped portion 511 has the above-described outer peripheral face 511S.

The first plate-shaped portion 511 has a flat plate shape. The first plate-shaped portion 511 extends parallel to an imaginary plane perpendicular to the first direction D1 in which the first opening portion 218 and the second opening portion 219 are arranged. That is, the first plate-shaped portion 511 is positioned on the inner peripheral face 210S of the cylindrical main body portion 210. The first plate-shaped portion 511 is made of a metal such as aluminum. The first plate-shaped portion 511 is provided with a negative electrode member 520.

The first plate-shaped portion 511 is provided with a pressure release valve 515. The pressure release valve 515 is provided so as to break when the internal pressure of the cell case 200 becomes equal to or higher than a predetermined pressure. When the pressure release valve 515 breaks, the gas in the cell case 200 is discharged to the outside of the cell case 200. Therefore, the internal pressure in the cell case 200 decreases.

The first extending portion 512 extends from the first plate-shaped portion 511 in the first direction D1. The first extending portion 512 is disposed on the inner peripheral face 210S of the cylindrical main body portion 210 (see FIG. 3). The first extending portion 512 extends along the inner peripheral face 210S of the cylindrical main body portion 210 and has a cylindrical outer shape (see FIG. 2). Specifically, the first extending portion 512 has a rectangular cylindrical outer shape. The first extending portion 512 is joined to the inner peripheral face 210S of the cylindrical main body portion 210.

The first extending portion 512 has an inner layer portion 512a and an outer layer portion 512b. The inner layer portion 512a is integrally formed with the first plate-shaped portion 511. That is, the first plate-shaped portion 511 is made of a metal such as aluminum. The outer layer portion 512b is disposed between the inner layer portion 512a and the cylindrical main body portion 210. The outer layer portion 512b is made of plastic. The outer layer portion 512b is joined to the inner peripheral face 210S of the cylindrical main body portion 210 by thermal welding.

The negative electrode member 520 is provided on the outer surface of the first plate-shaped portion 511. The negative electrode member 520 functions as a negative electrode terminal. The negative electrode member 520 includes a negative electrode terminal plate 521 and an insulating plate 522.

The negative electrode terminal plate 521 is formed in a substantially rectangular parallelepiped shape. The negative electrode terminal plate 521 is held by an insulating plate 522. The insulating plate 522 is fixed to the outer surface of the first plate-shaped portion 511. The insulating plate 522 insulates the first plate-shaped portion 511 from the negative electrode terminal plate 521. Each of the negative electrode terminal plate 521 and the insulating plate 522 is provided with a through hole through which a negative electrode connecting pin 533 described later is inserted.

The second sealing body 610 closes the second opening portion 219. The second sealing body 610 has a second outer peripheral face 611S in contact with the inner peripheral face 210S of the cylindrical main body portion 210. In the present embodiment, the entire second sealing body 610 is positioned on the inner peripheral face 210S of the cylindrical main body portion 210.

The second outer peripheral face 611S has a second main body surface portion 611Sa and a second protruding portion 611Sb.

The second main body surface portion 611Sa extends parallel to the first direction D1. The second protruding portion 611Sb protrudes from the second main body surface portion 611Sa toward the cylindrical main body portion 210. The second protruding portion 611Sb extends annularly along the circumference of the inner peripheral face 210S of the cylindrical main body portion 210.

The second sealing body 610 includes a second plate-shaped portion 611 and a second extending portion 612. Specifically, the second plate-shaped portion 611 has the above-described second outer peripheral face 611S.

The second plate-shaped portion 611 has a flat plate shape. The second plate-shaped portion 611 extends parallel to an imaginary plane perpendicular to the first direction D1. That is, the second plate-shaped portion 611 extends parallel to both the second direction D2 and the third direction D3. The second plate-shaped portion 611 is located on the inner peripheral face 210S of the cylindrical main body portion 210. The second plate-shaped portion 611 is made of a metal such as aluminum. The second plate-shaped portion 611 is provided with a positive electrode member 620.

The second plate-shaped portion 611 is provided with a pressure release valve 615. The pressure release valve 615 is provided so as to break when the internal pressure of the cell case 200 becomes equal to or higher than a predetermined pressure. When the pressure release valve 615 is broken, the gas in the cell case 200 is discharged to the outside of the cell case 200, and thus the internal pressure in the cell case 200 is lowered.

The second extending portion 612 extends from the second plate-shaped portion 611 in the first direction D1. The second extending portion 612 is disposed on the inner peripheral face 210S of the cylindrical main body portion 210 (see FIG. 3). The second extending portion 612 extends along the inner peripheral face 210S of the cylindrical main body portion 210 and has a cylindrical outer shape (see FIG. 2). Specifically, the second extending portion 612 has a rectangular cylindrical outer shape. The second extending portion 612 is joined to the inner peripheral face 210S of the cylindrical main body portion 210.

The second extending portion 612 has an inner layer portion 612a and an outer layer portion 612b. The inner layer portion 612a is integrally formed with the second plate-shaped portion 611. That is, the second plate-shaped portion 611 is made of a metal such as aluminum. The outer layer portion 612b is disposed between the inner layer portion 612a and the cylindrical main body portion 210. The outer layer portion 612b is made of plastic. The outer layer portion 612b is joined to the inner peripheral face 210S of the cylindrical main body portion 210 by thermal welding.

The positive electrode member 620 is provided on the outer surface of the second plate-shaped portion 611. The positive electrode member 620 functions as a positive electrode terminal. The positive electrode member 620 includes a positive electrode terminal plate 621 and a terminal block 622.

The positive electrode terminal plate 621 is formed in a rectangular parallelepiped shape. The positive electrode terminal plate 621 is made of a metal such as aluminum.

The terminal block 622 is formed in a rectangular parallelepiped shape. The terminal block 622 is made of a metal (iron or the like) different from the metal constituting the positive electrode terminal plate 621. The terminal block 622 is fixed to the outer surface of the second plate-shaped portion 611 by welding or the like. The positive electrode terminal plate 621 is fixed to the terminal block 622 by welding or the like. The second plate-shaped portion 611 is electrically connected to the positive electrode terminal plate 621 via the terminal block 622, and is charged to the same polarity as the positive electrode terminal plate 621. Each of the positive electrode terminal plate 621 and the terminal block 622 has a through hole through which a positive electrode connecting pin 633 described later is inserted.

Incidentally, the positive electrode member 620, an insulating plate is disposed between the second plate-like portion 611, the positive electrode member 620 and the second sealing body 610 may be electrically insulated. In this case, an insulating plate may be disposed instead of the terminal block 622, or an insulating plate may be disposed between the terminal block 622 and the second plate-shaped portion 611.

The power storage cell 10 further includes a negative electrode connecting member 530, a negative electrode side insulating member 550, and an insulator 560 on the negative electrode member 520 side.

The negative electrode connecting member 530 connects the negative electrode current collector 120N and the negative electrode terminal plate 521. The negative electrode current collector 120N is a part of the electrode body 100 formed by bundling a plurality of negative electrode tab 122n to be described later. The negative electrode connecting member 530 includes a negative electrode side first current collector 531, a negative electrode side second current collector 532, and a negative electrode connecting pin 533.

The negative electrode-side first current collector 531 is formed of a thin plate-shaped conductive member. The negative electrode-side first current collector 531 is connected to the negative electrode current collector 120N by laser welding, ultrasonic welding, or the like.

The negative electrode-side second current collector 532 is formed of a thin plate-shaped conductive member. The negative-electrode-side second current collector 532 is connected to the negative-electrode-side first current collector 531 by laser welding, ultrasonic welding, or the like. The negative electrode-side second current collector 532 has a holding portion 532a that holds the negative electrode connecting pin 533. The holding portion 532a has a flat plate shape. The holding portion 532a is provided with a through hole, and the base end of the negative electrode connecting pin 533 is inserted.

The negative electrode connecting pin 533 connects the negative electrode-side second current collector 532 and the negative electrode terminal plate 521. The negative electrode connecting pin 533 includes a cylindrical portion. The distal end side of the cylindrical portion passes through the first sealing body 510, the insulating plate 522, and the negative electrode terminal plate 521, and is caulked to the negative electrode terminal plate 521.

The negative electrode-side insulating member 550 is disposed between the first extending portion 512 and the electrode body 100. The negative-electrode-side insulating member 550 is provided with a slit 552 through which the negative-electrode current collector 120N is inserted.

The first extending portion 512 and the negative-electrode-side insulating member 550 are assembled to each other so that an accommodation space is formed between the first plate-shaped portion 511 and the negative-electrode-side insulating member 550. The negative-electrode current collector 120N, the negative-electrode-side first current collector 531, and the negative-electrode-side second current collector 532, which are inserted through the slits 552, are disposed in the accommodation space.

The insulator 560 has a shape that covers the cylindrical portion of the negative electrode connecting pin 533. The insulator 560 insulates the negative electrode connecting pin 533 from the cell case 200 (more specifically, the first plate-shaped portion 511).

The negative electrode member 520, the first sealing body 510, the negative electrode connecting member 530, the negative electrode side insulating member 550, and the insulator 560 are incorporated into the first lid assembly 50.

The first lid assembly 50 is fixed to the cylindrical main body portion 210 by attaching the first sealing body 510 to the first opening portion 218 while the negative electrode current collector 120N and the negative electrode connecting member 530 are fixed by welding or the like.

The power storage cell 10 further includes a positive electrode connecting member 630, a positive electrode side insulating member 650, and an insulator 660 on the positive electrode member 620 side.

The positive electrode connecting member 630 connects the positive electrode current collector 110P and the positive electrode terminal plate 621. The positive electrode current collector 110P is a part of the electrode body 100 formed by bundling a plurality of positive electrode tabs 112p described later. The positive electrode connecting member 630 includes a positive electrode-side first current collector 631, a positive electrode-side second current collector 632, and a positive electrode connecting pin 633.

The positive electrode-side first current collector 631 is formed of a thin plate-shaped conductive member. The positive electrode-side first current collector 631 is connected to the positive electrode current collector 110P by laser welding, ultrasonic welding, or the like.

The positive electrode-side second current collector 632 is formed of a thin plate-shaped conductive member. The positive electrode-side second current collector 632 is connected to the positive electrode-side first current collector 631 by laser welding, ultrasonic welding, or the like. The positive electrode-side second current collector 632 has a holding portion 632a that holds the positive electrode connecting pin 633. The holding portion 632a has a flat plate shape. The holding portion 632a is provided with a through hole, and the base end of the positive electrode connecting pin 633 is inserted.

The positive electrode connecting pin 633 connects the positive electrode-side second current collector 632 and the positive electrode terminal plate 621. The positive electrode connecting pin 633 includes a cylindrical portion. The distal end side of the cylindrical portion penetrates the second sealing body 610, the terminal block 622, and the positive electrode terminal plate 621, and is crimped to the positive electrode terminal plate 621.

The positive electrode-side insulating member 650 is disposed between the second extending portion 612 and the electrode body 100. The positive electrode-side insulating member 650 is provided with a slit 652 through which the positive electrode current collector 110P is inserted.

The second extending portion 612 and the positive-electrode-side insulating member 650 are assembled to each other so that an accommodation space is formed between the second plate-shaped portion 611 and the positive-electrode-side insulating member 650. The positive-electrode current collector 110P, the positive-electrode-side first current collector 631, and the positive-electrode-side second current collector 632 inserted through the slit 552 are disposed in the accommodation space.

The insulator 660 has a shape that covers the cylindrical portion of the positive electrode connecting pin 633. The insulator 660 insulates the positive electrode connecting pin 633 from the cell case 200 (more specifically, the second plate-shaped portion 611).

The positive electrode member 620, the second sealing body 610, the positive electrode connecting member 630, the positive electrode-side insulating member 650, and the insulator 660 described above are incorporated into the second lid assembly 60.

The second lid assembly 60 is fixed to the cylindrical main body portion 210 by attaching the second sealing body 610 to the second opening portion 219 while the positive electrode current collector 110P and the positive electrode connecting member 630 are fixed by welding or the like.

Hereinafter, a method of molding the cylindrical main body portion 210 using the film F will be described. FIG. 6 is a perspective view schematically showing a state in which the cell case is formed in the power storage cell according to the embodiment. In FIG. 6, the same reference numerals as those of the respective portions corresponding to the cylindrical main body portion 210 are given to the respective portions of the film F.

In the present embodiment, the method of forming the cylindrical main body portion 210 includes three welding steps. As illustrated in FIGS. 1 to 3 and 6, in the first welding step, a portion of the film F corresponding to the bottom surface portion 211, the first side surface portion 212, and the second side surface portion 213 is thermally welded to the first extending portion 512 and the second extending portion 612 while the film F is bent. See FIG. 6, etc. In addition, the respective parts of the films F may be bonded to the (first) outer peripheral face 511S and the second outer peripheral face 611S by an adhesive or the like.

Next, in the second welding step, a portion of the film F corresponding to the top surface portion 214 is thermally welded to the first extending portion 512 and the second extending portion 612. In addition, a part of the film F corresponding to the top surface portion 214 may be adhered to the (first) outer peripheral face 511S and the second outer peripheral face 611S by an adhesive or the like.

Finally, in the third welding step, the first side end portion FE1 and the second side end portion FE2 are thermally welded to each other. As a result, the cylindrical main body portion 210 is formed, and the cylindrical main body portion 210 is sealed by the first sealing body 510 and the second sealing body 610. The order of the second welding step and the third welding step is not particularly limited.

After the first welding step and before the second welding step and the third welding step, the electrolytic solution is injected (see FIG. 6). Specifically, the electrolytic solution is injected into the space formed by the film F, the first sealing body 510, and the second sealing body 610 through the liquid injection pipe P. As described above, by forming the cylindrical main body portion 210 with the film F, even when the cylindrical main body portion 210 is relatively long in the first direction D1, the electrolyte can be easily injected throughout the entire first direction D1.

Next, a film constituting the cylindrical main body portion 210 will be described. As shown in FIG. 5, the film F in the present embodiment is a so-called laminate film. The thickness of the film F is, for example, 70 µm or more and 220 µm or less. The film F includes a resin layer L1, a metal layer L2, and a second resin layer L3.

The resin layer L1 constitutes an inner peripheral face 210S of the cylindrical main body portion 210. In the present embodiment, the resin layer L1 includes a (first) hole portion H1 and a second hole portion H2. The hole portion H1 is fitted to the protruding portion 511Sb. The second hole portion H2 is fitted to the second protruding portion 611Sb. The hole portion H1 and the second hole portion H2 penetrate through the resin layer L1. The hole portion H1 extends annularly along the protruding portion 511Sb. The second hole portion H2 extends annularly along the second protruding portion 611Sb.

Note that the hole portion H1 and the second hole portion H2 may not be provided. When the hole portion H1 is not provided in the resin layer L1, the film F (the cylindrical main body portion 210) may be bent along the protruding portion 511Sb. When the second hole portion H2 is not provided in the resin layer L1, the film F (the cylindrical main body portion 210) may be bent along the second protruding portion 611Sb.

Further, the outer layer portion 512b made of resin in the first extending portion 512 is thermally welded to the resin layer L1. Similarly, the outer layer portion 612b made of resin in the second extending portion 612 is thermally welded to the resin layer L1.

Examples of the resin layer L1 include olefinic resins such as polypropylene (PP) and polyethylene (PE). The thickness of the resin layer L1 is, for example, 40 µm or more and 100 µm or less. The resin layer L1 may include a plurality of resin films made of the above-described materials.

The metal layer L2 is laminated on the resin layer L1. Accordingly, the moisture permeability of the film F can be lowered. The metal layer L2 may be made of, for example, aluminum, aluminum alloy, or stainless steel. The thickness of the metal layers L2 is, for example, 30 µm or more and 60 µm or less.

The second resin layer L3 is laminated on the metal layer L2 at a position opposite to the resin layer L1 when viewed from the metal layer L2. The second resin layer L3 may be made of, for example, polyethylene terephthalate (PET) or nylon. The thickness of the resin layer is, for example, 20 µm or more and 60 µm or less. The second resin layer L3 may include a plurality of resin films made of the above-described materials.

As described above, the power storage cell 10 according to the embodiment of the present disclosure includes the electrode body 100 and the cell case 200. The cell case 200 houses the electrode body 100. The cell case 200 includes a cylindrical main body portion 210, a first sealing body 510, and a second sealing body 610. The cylindrical main body portion 210 is formed by forming the film F into a cylindrical shape, and the first opening portion 218 and the second opening portion 219 are formed at both ends thereof, respectively. The first sealing body 510 closes the first opening portion 218. The second sealing body 610 closes the second opening portion 219. The first sealing body 510 has an outer peripheral face 511S in contact with the inner peripheral face 210S of the cylindrical main body portion 210. The outer peripheral face 511S has a main body surface portion 511Sa and a protruding portion 511Sb. The main body surface portion 511Sa extends parallel to the first direction D1 in which the first opening portion 218 and the second opening portion 219 are arranged. The protruding portion 511Sb protrudes from the main body surface portion 511Sa toward the cylindrical main body portion 210.

According to the above-described configuration, since the cylindrical main body portion 210 of the cell case 200 is formed of the film F, it is possible to increase the dimensional flexibility of the cell case 200 in the first direction D1. Furthermore, even when the cylindrical main body portion 210 is formed from the film F, the space between the inner peripheral face 210S and the outer peripheral face 511S is labyrinth-structured by the main body surface portion 511Sa and the protruding portion 511Sb. Thus, even when the cylindrical main body portion 210 of the cell case 200 is formed from the film F, it is possible to suppress a decrease in the sealing property of the cell case 200.

In addition, in the present embodiment, the film F includes a resin layer L1 constituting the inner peripheral face 210S of the cylindrical main body portion 210, and a metal layer L2 laminated on the resin layer L1. The resin layer L1 has a hole portion H1 that is fitted to the protruding portion 511Sb.

According to the above configuration, the thickness of the part of the resin layer L1 between the metal layer L2 and the protruding portion 511Sb is relatively small. Accordingly, the moisture permeability between the metal layers L2 and the protruding portion 511Sb can be further reduced.

In the present embodiment, the hole portion H1 penetrates the resin layer L1. The protruding portion 511Sb is in contact with the metal layer L2 via the hole portion H1.

According to the above configuration, the moisture permeability between the metal layers L2 and the protruding portion 511Sb can be further reduced.

In addition, in the present embodiment, the protruding portion 511Sb extends annularly along the circumferential direction of the inner peripheral face 210S of the cylindrical main body portion 210. The hole portion H1 extends annularly along the protruding portion 511Sb.

According to the above-described configuration, the labyrinth structure is formed by the main body surface portion 511Sa and the protruding portion 511Sb in the entire circumferential direction of the inner peripheral face 210S. As a result, it is possible to further suppress a decrease in the sealing property of the cell case 200.

It should be understood that the embodiments disclosed herein are illustrative and non-restrictive in all respects. The scope of the invention is indicated by the appended claims rather than by the foregoing description of the embodiments. Furthermore, the scope of the present invention includes all modifications within the meaning and range equivalent to the scope of the claims.

## Claims

1. A power storage cell, comprising:
an electrode body; and
a cell case for accommodating the electrode body, wherein
the cell case includes
a cylindrical main body portion in which a film is fashioned into a cylindrical shape, with a first opening portion and a second opening portion provided at respective ends,
a first sealing body for closing the first opening portion, and
a second sealing body for closing the second opening portion,
the first sealing body includes an outer peripheral face that adheres to an inner peripheral face of the cylindrical main body portion, and
the outer peripheral face includes a main body surface portion extending in parallel to a first direction in which the first opening portion and the second opening portion are arrayed, and a protruding portion protruding from the main body surface portion toward the cylindrical main body portion.

2. The power storage cell according to claim 1, wherein
the film includes a resin layer making up the inner peripheral face of the cylindrical main body portion, and a metal layer laminated on the resin layer, and
a hole portion, to which the protruding portion is fitted, is provided in the resin layer.

3. The power storage cell according to claim 2, wherein
the hole portion passes through the resin layer, and
the protruding portion is in contact with the metal layer via the hole portion.

4. The power storage cell according to claim 2 or claim 3, wherein
the protruding portion extends in an annular shape along a circumferential direction of the inner peripheral face of the cylindrical main body portion, and
the hole portion extends in an annular shape along the protruding portion.
